(19) **Europäisches Patentamt / European Patent Office / Office européen des brevets**

(11) **EP 3 525 225 B1**

(12) **EUROPEAN PATENT SPECIFICATION**

(45) Date of publication and mention of the grant of the patent:
**12.01.2022  Bulletin 2022/02**

(51) Int Cl.:
*H01H 47/06* (2006.01)   *H01H 47/32* (2006.01)
*H01H 47/22* (2006.01)   *H01H 47/08* (2006.01)
*H01F 7/18* (2006.01)   *H01H 50/44* (2006.01)

(21) Application number: **18382068.7**

(22) Date of filing: **08.02.2018**

(54) **CONTACTOR SYSTEM FOR A FLUCTUATING DC POWER SUPPLY AND METHOD FOR STABILISING A CONTACTOR SYSTEM FED BY A FLUCTUATING DC POWER SUPPLY**

SCHÜTZSYSTEM FÜR EINE SCHWANKENDE GLEICHSTROMVERSORGUNG UND VERFAHREN ZUR STABILISIERUNG EINES VON EINER SCHWANKENDEN GLEICHSTROMVERSORGUNG GESPEISTEN SCHÜTZSYSTEMS

SYSTÈME DE CONTACTEUR POUR UNE ALIMENTATION À COURANT CONTINU FLUCTUANT ET PROCÉDÉ DE STABILISATION D'UN SYSTÈME DE CONTACTEUR ALIMENTÉ PAR UNE ALIMENTATION À COURANT CONTINU FLUCTUANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.08.2019  Bulletin 2019/33**

(73) Proprietor: **Fico Triad, S.A.**
**08028 Barcelona (ES)**

(72) Inventor: **SALA MASIP, Enric**
**08232 Viladecavalls (Barcelona) (ES)**

(74) Representative: **Elzaburu S.L.P.**
**Edificio Torre de Cristal**
**Paseo de la Castellana 259 C, planta 28**
**28046 Madrid (ES)**

(56) References cited:
**EP-A1- 3 046 131     WO-A1-2009/064308**
**DE-A1- 2 305 343     US-A- 4 227 231**

# Description

## Field of the invention

The invention is related to a contactor system for a fluctuating continuous (DC) power supply that enhances the stability of the connection of the contactor. The invention have a particular application in a battery junction box of an electric vehicle.

## Background of the invention

For the protection of batteries, for instance, in the environment of a battery junction box, a typical solution is to use electromechanical contactors for the connection and disconnection of the high-voltage cables (HV cables).

Two single pole contactors are used, one operating in the positive high voltage (HV) cable and other operating in the negative high voltage (HV) cable. The driving of the contactors is done at low voltage, using the low voltage (LV) battery of the vehicle, usually rated at 12 V.

Known contactors comprise an electromagnetic coil having a winding, a first and a second terminals, or electrical connections of the winding, located in the electromagnetic coil and connected to the DC power supply. The first and the second terminals establish a connection with the power supply such that operate the electromagnetic coil at the voltage provided by the power supply. The contactor also comprises a switch configured to be operated by the electromagnetic coil when excited by the applied voltage. When the voltage is applied to the electromagnetic coil the switch is closed and it will be kept closed as long as the voltage is applied to the electromagnetic coil, when the voltage is not applied, the switch will be open.

The driving voltage from the low-voltage battery (LV battery) may be a fluctuating voltage, not perfectly stable, and can have overvoltages and undervoltages that, in some cases, can produce malfunction of the contactor.

The elements using these known contactors are tested according to some standards that reproduce possible abnormal conditions of the low voltage power supply, applying many test cases with different voltage profiles. Some examples show that the low voltage can drop, for instance, from 12V to 3.2V for 19 ms.

As a result, if the contactor is working in normal operation, the contactor suffers an undervoltage in the electromagnetic coil and the contactor can suddenly change the switch from "closed" to "open". This event can produce the disconnection of the high voltage battery, leaving the electric vehicle under uncontrolled situation.

Contactors are usually designed to work with a low voltage of 12V, plus/minus a certain tolerance, but not so wide to operate correctly under severe fluctuation conditions. For instance, a typical voltage range for the contactor 12V coil is, depending on supplier:

$$Vmin = 9V$$

$$Vmax = 14V$$

In order to avoid this problem, a known solution is to provide a DC/DC converter that converts a wide range of low voltage, for instance, from 3V to 26V), to a stabilized voltage of 12V for the operation of the contactor coil.

Nevertheless, this solution is expensive, takes more surface into the PCBs and produces a lot of noise (EMC) due to the fact that the DC/DC converter is implemented by high frequency switching and the system is permanently working.

It is known document WO2009/064308 disclosing a system and method for protecting a coil structure in a controlled switch. In one embodiment, the invention relates to a circuit including at least one load switch connectable between a power source and a load and at least one auxiliary switch, each switch actuable between a default position and a switched position, a coil structure configured to actuate the at least one load switch and at least one auxiliary switch in response to a control input, the coil structure switchable between an actuating configuration for actuating the at least one load switch and the at least one auxiliary switch from the default position, and a holding configuration for holding the at least one load switch and the at least one auxiliary switch in the switched position, and a resettable current limiting device configured to limit the current flow in the actuating configuration of the coil structure if the current flow exceeds a threshold for a predetermined period of time, wherein the at least one auxiliary switch is configured to switch the coil structure from the actuating configuration to the holding configuration.

It is also known document EP3046131 disclosing a circuit for use with a contactor including at least one contact. The circuit includes a first segment including a voltage source, a first coil, a second coil, and a first transistor, wherein the first segment is configured to selectively conduct a closing current through the first coil, the second coil, and the first transistor to close the at least one contact. The circuit further includes a second segment including the first coil, a second transistor, and a first diode, wherein the second segment is configured to selectively conduct a holding current through the first coil, the second transistor, and the first diode to hold the at least one contact closed, and wherein the first diode is arranged such that substantially all current produced by the voltage source flows through the first coil.

It is also known document US4227231 disclosing an electromagnetic relay is provided with a high current "boost" coil, a lower current normal operating or "seal" coil and a static, electronic circuit that functions under low voltage conditions to energize the boost coil to retain the relay closed. An additional function of this static, electronic circuit is to energize the boost coil for a time interval on initial power application in order to assist in closing the relay, and this time interval automatically varies in the correct direction with variation in the supply voltage available to the coil so that the lower such available voltage is from its normal value, the longer the boosting time interval. At other times, both coils are energized in series at low current to hold the relay closed. This static, electronic circuit is small enough to be integrally incorporated within the housing of a conventional sealed power relay.

It is also known document DE2305343 disclosing a circuit on an excitation coil for contactors or relays for direct current operation with two or more coil windings. According to the disclosed invention, an RC element is charged at the same time as the operating voltage is switched on, the time constant of which is greater than the pull-in time of the contactor or relay and the charging current of the RC element switches a first transistor conductive, the collector-emitter current of which is indirect or direct for the duration the time constant either leads the excitation current through a part of the windings lying in series, which is sufficient for tightening, and around the other part of the windings, or turns on two or more transistors, which in a series-parallel circuit connects the winding parts in parallel.

## Summary of the invention

In order to overcome the aforementioned drawbacks, a contactor system as set forth in claim 1 is provided, in particular the contactor system comprising the following:

- the contactor also comprising at least an additional terminal located between the first and the second terminals in the longitudinal axis of the electromagnetic coil and configured to be connected to the DC power supply, the first and the additional terminals and the additional and the second terminals being configured to operate the electromagnetic coil at a second or third voltage provided by the DC power supply, the second and third voltage voltage being equal or lower than the voltage provided by the DC power supply for operating the contactor from the first and second terminals, and
- a measuring device configured to measure the voltage provided by the DC power supply and configured to operate the contactor from the first and the second terminals or from the first and the additional terminals or from the additional and the second terminals according of the measured voltage.

Hence, the claimed contactor system is designed with a contactor comprising at least an additional terminal located at an additional contact point in the winding to be operated at a lower voltage, for instance, half voltage of the first terminal. With this system, the contactor could be operated using the connections performed by the terminal located at a high contact point in the coil and the terminal located at a lower contact point or by the terminal located at the additional contact point and the terminal located at a lower contact poing or even by the terminal located at a high contact point and the terminal located at the additional contact point. All these connections could produce the same result in the contactor operation, for instance, when the additional terminal is located at the mid point between the first and the second terminals in the longitudinal axis of the electromagnetic coil, 12 V between the first terminal and second terminal, 6V between the additional terminal and second terminal and 6V between the first terminal and additional terminal.

The additional contact point in the winding of the electromagnetic coil may be located at several locations in the longitudinal axis of the electromagnetic coil. For instance, it may located at midpoint between the contact point of the first terminal and the second terminal or at ¾ of said distance or located in a different location between both known contact points as long as the same result in the contactor operation is achieved.

Said same result in the contactor operation is achieved because the contactor is able to perform its duty at lower tensions provided by the battery or power supply depending on the length of the electromagnetic coil, understanding for length of the electromagnetic coil, the distance in the winding between the contact point of the first and second terminal. For instance, for half the reference voltage applied at midpoint in the winding, the intensity in the coil would be the same because according to the Ohm law V = R * I and considering that R is proportional to the length of the conductor, the intensity will be therefore the same as applying the reference voltage at the first terminal.

As previously said, the additional terminal may be located in half the distance between the first and the second terminals in the longitudinal axis of the electromagnetic coil or at a different distance in the longitudinal axis of the electromagnetic coil, i.e. with an assimetric location with respect to the first and the second terminals. The assimetric location of the additional terminal have the advantage that a more variety of operating voltages are achieved as there are two distinct potencial differences between the first and the additional terminal and between the additional terminal and the second terminal.

Considering, as previously stated, an embodiment providing 12 V between the first terminal and second terminal, 6V between the additional terminal and second terminal and 6V between the first terminal and additional terminal, a certain overlap should always exist using the different voltage rates, depending on the two terminals used for the connection and the tolerances provided for each terminal. For instance, using the first terminal and the second terminal or the additional terminal and the second terminal and, in that range, the contactor could be operated using the first connection, i.e., the first and second terminals, or the second connection, i.e., the additional and second terminals, from the range 8V to 9V provided by the power supply.

Therefore the at least one additional terminal operating in a different length of the winding allows driving the contactor with a very wide range of low voltages.

The claimed contactor is simpler than the DC/DC converter known in the state of the art often used in similar applications. Additionally, the contactor may operate through the additional terminal only when the voltage drop is less than, for instance, 8.5 V which is not frequent.

In known contactors having a connection with the power supply involving the first terminal and the second terminal, at the beginning, the contactor is open and the voltage is applied to the electromagnetic coil but still the switch has not moved to closed status. This is called the pick-up status. In this status it is necessary to exert a higher force to the electromagnetic coil just to be able to close the switch, i.e. move the magnetic yoke.

Afterwards, the voltage remains applied to the electromagnetic coil but the switch has already moved to closed status. This is called the hold status. In this status the necessary force to maintain the contactor closed is much lower than at the pick-up status. For that purpose, in many applications a Pulse Width Modulation (PWM) system is implemented in known converters just to reduce the power consumption.

Related to the above phenomenon, an additional advantage of the claimed contactor is that it can be operated as follows due to its configuration:

Pick-Up Status

Voltage is applied to the additional and the second terminals even in the case that the voltage provided by the power supply is equal to the voltage applied by the first and the second terminals. This produces a stronger power applied to the contactor that facilitates the switch to close. It means that, for instance, a voltage of 12 V can be applied through the additional and the second terminals as long as said additional terminal is located at an appropriate contact point in the coil, for instance ¾ of the total length.

Hold Status

After some milliseconds (i.e. 300ms), the voltage is applied through the first and second terminals, to reduce the power consumption and the force that the contactor makes to maintain the switch closed.

Therefore, an additional advantage of the contactor object of the invention is that a more powerful coil for the contactor is not needed for the change of state, since we momentarily force the contactor to apply the voltage of the first terminal through the additional terminal and when the contact is available in its stable state is allowed to the normal input from the first terminal.

It is also an object of the invention a method for stabilising a contactor system fed by a fluctuating DC power supply, the method comprising the following steps:

- providing a contactor comprising:

  - an electromagnetic coil having a winding, and

  - a first and a second terminals located in the electromagnetic coil and configured to be connected to the DC power supply, the first and second terminals being configured to operate the electromagnetic coil at a first voltage provided by the DC power supply,

- providing at least an additional terminal to the contactor, the additional terminal located between the first and the second terminals in the longitudinal axis of the electromagnetic coil and configured to be connected to the DC power supply, the first and the additional terminals and the additional and the second terminals being configured to operate the electromagnetic coil at a second or third voltage provided by the DC power supply, the second and third voltages being equal or lower than the first voltage,

- providing a measuring device configured to measure the voltage provided by the fluctuating DC power supply,

- operating the contactor from the first and the second terminals or from the first and the additional terminals or from the additional and the second terminals depending of the measured voltage.

**Description of the figures**

To complete the description and in order to provide for a better understanding of the invention, a set of drawings is provided. Said drawings form an integral part of the description and illustrate preferred embodiments of the invention. The drawings comprise the following figures.

Figure 1 shows a contactor known in the state of the art.

Figure 2 shows a first embodiment of a contactor according to the invention.

Figure 3 shows the overlap of voltage operating the electromagnetic coil of the contactor according the embodiment of figure 2.

Figure 4 shows an embodiment of the contactor system according to the embodiment of figure 2.

Figure 5 shows a second embodiment of the contactor system.

Figure 6 shows a third embodiment of the contactor system.

Figure 7 shows an implementation of the electronic circuit of an embodiment of the contactor system.

## Detailed description of the invention

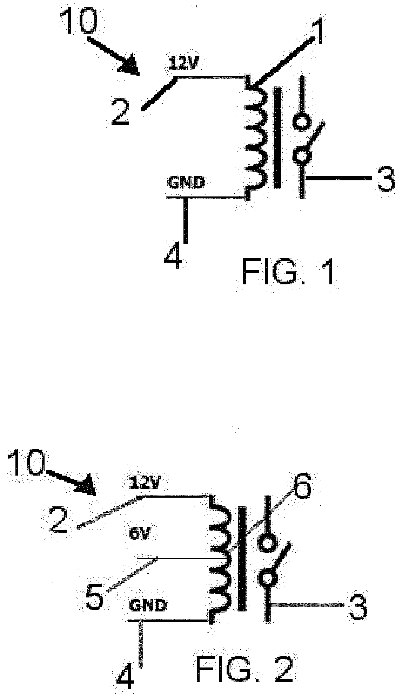

Figure 1 shows a contactor (10) known in the state of the art comprising an electromagnetic coil (1) having a winding, a first terminal (2) and a second terminal (4), both terminals (2, 4) being configured to operate the electromagnetic coil (1) at a predetermined voltage. Specifically, the second terminal (4) connects the electromagnetic coil (1) to ground. The contactor (10) also comprises a switch (3) configured to be operated by the electromagnetic coil (1).

Figure 2 shows a first embodiment of a contactor (10) according to the claimed invention disclosing an additional terminal (5), hence being located between the first and the second terminals (2, 4) in the longitudinal axis of the electromagnetic coil (1) and configured to be connected to the DC power supply. Specifically, the embodiment shown in figure 2 discloses an additional terminal (5) located at mid-point (6) between the first (2) and the second (4) terminal in the longitudinal axis of the electromagnetic coil (1).

In this embodiment, three different connections can be stablished with the power supply, the already known connection between the first and the second terminal (2, 4) and the following two additional connections:

- the first and the additional terminals (2, 5), and

- the additional and the second terminals (5, 4).

Said two additional connections are configured to operate the electromagnetic coil (1) at a second or third voltage provided by the DC power supply, the second and third voltage being equal or lower than the first voltage operated by the first and the second terminals (2, 4). If the additional terminal (5) is located at mid-point (6) between the first and the second terminals (2, 4), the second and third voltage that are provided by the first and additional terminals (2, 5) and the additional and the second terminals (5, 4) are equal.

According to an embodiment and the standard tolerances allowed in the power supply of the electromagnetic coil (1) the following ranges could be defined for the embodiments shown in figure 2:

- 12V operation: (from 8V to 15V), with a connection stablished with the first and second terminals (2, 4).

- 6V operation: (from 3V to 9V):

  • with a connection stablished with the additional and the second terminals (5, 4), or

  • with a connection stablished with the first and the additional terminals (2, 5).

As previously stated, in the above embodiment of voltages, a certain overlap from 8V to 9V exists and, in that range, the contactor could be operated through any of the above combinations of terminals.

The claimed contactor system also comprises a measuring device (8) to measure the real input voltage provided by the fluctuating DC power supply and to compare it with a predetermined value and to choose the entrance terminal (2, 5) and/or the exit terminal (5, 4) into the electromagnetic coil (1) according to the obtained comparison. For instance, if there is only the possibility to chose for the entrance terminal, the measuring device (8) compares the voltage provided by the power supply with a predetermined value and provides a signal to change to the first terminal (2) if the obtained comparison is over or equal the predetermined value or to the additional terminal (5) if the obtained comparison is below the predetermined value. Said measuring device (8) can be integrated into the same housing of the contactor (10) or being an external element to said housing.

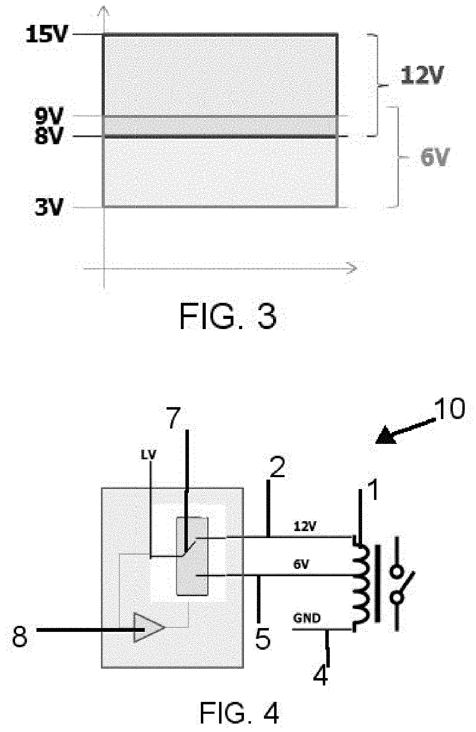

The embodiment shown in Figure 4 additionallly depicts that the contactor system may comprise an electronic switch (7) to activate the electromagnetic coil (1) from the first terminal (2) or the additional terminal (5), the switch (7) located between the power supply and the electromagnetic coil (1) and movable between the first (2) and the additional terminal (5) for activating the electromagnetic coil (1) from said first (2) or additional (5) terminal, according to the previously stated for figure 4, i.e., first and second terminals (2, 4) or even additional and second terminal (5, 4). Another option would be to locate the switch (7) such that is movable between the additional terminal (5) and the second terminal (4) for operating the electromagnetic coil (1) from the first and the additional terminals (2, 5) or from the first and the second terminals (2, 4).

According to the embodiment of figure 4, in case that the low voltage (LV) provided by the power supply is higher or equal than 8.5 V, the low voltage (LV) will be applied to the first and the second terminals (2, 4). In case that the LV voltage provided by the power supply is lower than 8.5V the LV voltage will be applied to the additional and the second terminals (5, 4).

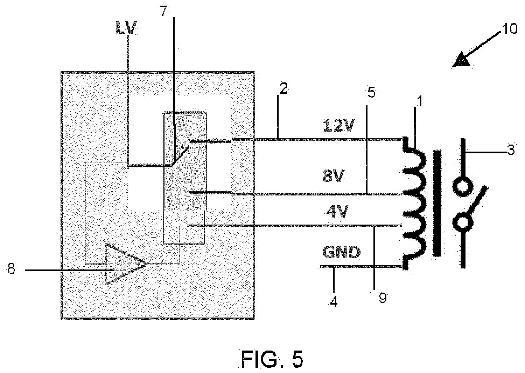

Figure 5 discloses a second embodiment of the contactor having three operating voltages: 12V, 8V and 4V. The contactor comprises the additional terminal (5) and a second additional terminal (9) configured to operate the electromagnetic coil (1) at a voltage equal or lower than the first terminal (2), the additional terminals (5, 9) being located between the first (2) and the second terminals (4) in the longitudinal axis of the electromagnetic coil (1).

The comparator (8) disclosed in figure 5 is also configured to measure the voltage provided by the fluctuating DC power supply and depending the measured voltage to operate the contactor (10) between the first terminal (2) and the second terminal (4), between the additional terminal (5) and the second terminal (4) or between the second additional terminal (9) and the second terminal (4). The switch (7) is movable among the three corresponding terminals (2, 5, 9), other connection configurations between additional terminals (5, 9) and first terminal are not ruled out.

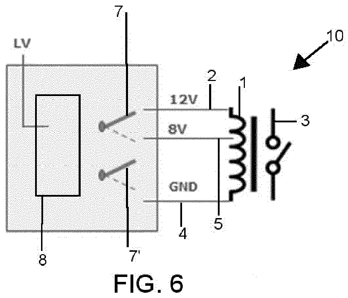

Figure 6 discloses a third embodiment in which there are three terminals (2, 5, 4) for achieving the contact operarion in also three different operating voltages:

- 12V with the combination of the first and the second terminals (2, 4),

- 8V with the combination of the additional and the second terminals (5, 4), and

- 4 V with the combination of the first and additional terminals (2, 5).

The contactor (10) comprises also a second switch (7'). The switch (7) is movable between the first and the additional terminal (2, 5) and the second switch (7') is movable between the additional terminal (5) and the second terminal (4). Hence, depending of the position of the switches (7, 7'), the electromagnetic coil (1) can be operated by the aforementioned voltages 12V, 8V and 4V.

The advantage of having two different switches (7, 7') in a combination of terminals having the additional terminal (5) in an assimetric location with respect to the first and the second terminals (2, 4) is that a more variety of operating voltages are achieved as there are two distinct potencial differences between the first and the additional terminal (2, 5) and between the additional terminal and the second terminal (5, 4) that can be operated in an independent way by the two switches (7, 7').

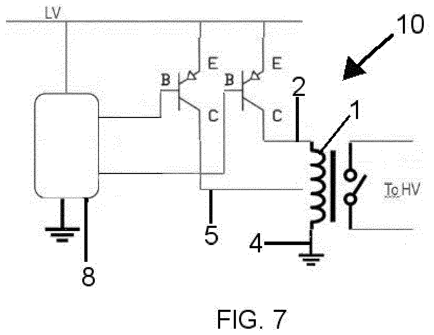

Figure 7 discloses an additional embodiment of the electric circuit of the claimed contactor system comprising three terminals (2, 5, 4) and a measuring device (8) connected to the low voltage battery.

**Claims**

1. Contactor system for a fluctuating DC power supply, the contactor system comprising a contactor (10) that comprises:

   - an electromagnetic coil (1) having a winding, and

   - a first and a second terminals (2, 4) located in the electromagnetic coil (1) and configured to be connected to the DC power supply, the first and second terminals (2, 4) being configured to operate the electromagnetic coil (1) at a first voltage provided by the DC power supply,
   - at least an additional terminal (5) located between the first and the second terminals (2, 4) in the longitudinal axis of the electromagnetic coil (1), **characterised in that**:
   - the additional terminal (5) located between the first and the second terminals (2, 4) in the longitudinal axis of the electromagnetic coil (1) is configured to be connected to the DC power supply, the first and the additional terminals (2, 5) and the additional and the second terminals (5, 4) being configured to operate the electromagnetic coil (1) at a second or third voltage provided by the DC power supply, the second and third voltages being equal or lower than the first voltage, and **in that**
   - the contactor system further comprises a measuring device (8) configured to measure the voltage provided by the DC power supply and configured to operate the contactor (10) from the first and the second terminals (2, 4) or from the first and the additional terminals (2, 5) or from the additional and the second terminals (5, 4) according of the measured voltage.

2. Contactor system, according to claim 1, wherein it comprises a switch (7) configured to be located between the measuring device (8) and the contactor (10) and movable between the first terminal (2) and the additional terminal (5) for operating the electromagnetic coil (1) from the first and the second terminals (2, 4) or from the additional and the second terminals (5, 4).

3. Contactor system, according to claim 1, wherein it comprises a switch (7) configured to be located between the measuring device (8) and the contactor (10) and movable between the additional terminal (5) and the second terminal (4) for operating the electromagnetic coil (1) from the first and the additional terminals (2, 5) or from the first and the second terminals (2, 4).

4. Contactor system, according to claim 2, wherein the switch (7) is movable between the first terminal (2) and the additional terminal (5) and the contactor system also comprises a second switch (7') configured to be located between the measuring device (8) and the contactor (10) and movable between the additional terminal (5) and the second terminal (4) for operating the electromagnetic coil (1).

5. Contactor system, according to any preceding claim, wherein the contactor (10) also comprises a second additional terminal (9) located between the first and the second terminals (2, 4) in the longitudinal axis of the electromagnetic coil (1) and configured to be connected to the DC power supply, the first and the second additional terminal (2, 9), the second additional terminal (9) and the second terminal (4) and the additional terminals (5, 9) being configured to operate the electromagnetic coil (1) at additional voltages provided by the DC power supply, said additional voltages being equal or lower than the first voltage.

6. Contactor system, according to claim 5, wherein the switch (7) is movable between the first terminal (2), the additional terminal (5) and the second additional terminal (9) for operating the electromagnetic coil (1) from either the first and the second terminals (2, 4), from the additional and the second terminals (5,4) or from the second additional and the second terminals (9, 4).

7. Contactor system, according to claim 5, wherein the switch (7) is movable between the additional terminal (5), the second additional terminal (9) and the second terminal (4) for operating the electromagnetic coil (1) from either the first and the second terminals (2, 4), from the first and additional terminals (2, 5) or from the first terminal and second additional terminals (2, 9).

8. Contactor system, according to any preceding claim, wherein the additional terminal (5) is located in half the distance in the longitudinal axis of the electromagnetic coil (1) between the first and the second terminals (2, 4).

9. Contactor system, according to any preceding claim 1 to 7, wherein the additional terminal (5) is located at a different distance in the longitudinal axis of the electromagnetic coil (1) of the first and of the second terminals (2, 4).

10. Method for stabilising a contactor system fed by a fluctuating DC power supply, the method comprising the following steps:

   - providing a contactor (10) comprising:

      - an electromagnetic coil (1) having a winding, and
      - a first and a second terminals (2, 4) located in the electromagnetic coil (1) and configured to be connected to the DC power supply, the first and second terminals (2, 4) being configured to operate the electromagnetic coil (1) at a first voltage provided by the DC power supply,

   - providing at least an additional terminal (5) to the contactor (10), the additional terminal (5) located between the first and the second terminals (2, 4) in the longitudinal axis of the electromagnetic coil (1) and configured to be connected to the DC power supply, the first and the additional terminals (2, 5) and the additional and the second terminals (5, 4) being configured to operate the electromagnetic coil (1) at a second or third voltage provided by the DC power supply, the second and third voltages being equal or lower than the first voltage,
   - providing a measuring device (8) configured to measure the voltage provided by the fluctuating DC power supply,
   - operating the contactor (10) from the first and the second terminals (2, 4) or from the first and the additional terminals (2, 5) or from the additional and the second terminals (5, 4) depending of the measured voltage.

11. Method for stabilising a contactor system fed by a fluctuating DC power supply, according to claim 10, comprising the step of providing a switch (7) configured to be located between the measuring device (8) and the contactor (10) and moving the switch (7) between the first terminal (2) and the additional terminal (5) for operating the electromagnetic coil (1) from the first and the second terminals (2, 4) or from the additional and the second terminals (5, 4).

12. Method for stabilising a contactor system fed by a fluctuating DC power supply, according to claim 10, comprising the step of providing two switches (7, 7') and moving one of the two switches (7) between the first and the additional terminal (2, 5) and moving the other switch (7') between the additional terminal (5) and the second terminal (4).

13. Method for stabilising a contactor system fed by a fluctuating DC power supply, according to claim 10 to 12, comprising the step of providing two additional terminals (5, 9) located between the first and the second terminals (2, 4) in the longitudinal axis of the electromagnetic coil (1), the first and each of the additional terminals (2, 5, 9), each of the additional terminals and the second terminals (5, 9, 4) and the additional terminals (5, 9) being configured to operate the electromagnetic coil (1) at a voltage provided by the DC power supply, said voltage being equal or lower than the first voltage.

**Patentansprüche**

1. Schützsystem für eine schwankende Gleichstromversorgung, wobei das Schützsystem ein Schütz (10) umfasst, das Folgendes umfasst:

- eine elektromagnetische Spule (1) mit einer Wicklung, und

- einen ersten und einen zweiten Anschluss (2, 4), die sich in der elektromagnetischen Spule (1) befinden und dazu konfiguriert sind, mit der Gleichstromversorgung verbunden zu werden, wobei der erste und der zweite Anschluss (2, 4) dazu konfiguriert sind, die elektromagnetische Spule (1) bei einer ersten Spannung zu betreiben, die durch die Gleichstromversorgung bereitgestellt wird,

- mindestens einen zusätzlichen Anschluss (5), der sich zwischen dem ersten und dem zweiten Anschluss (2, 4) in der Längsachse der elektromagnetischen Spule (1) befindet, **dadurch gekennzeichnet, dass**:

- der zusätzliche Anschluss (5), der sich zwischen dem ersten und dem zweiten Anschluss (2, 4) in der Längsachse der elektromagnetischen Spule (1) befindet, konfiguriert ist, um mit der Gleichstromversorgung verbunden zu werden, wobei der erste und der zusätzliche Anschluss (2, 5) und der zusätzliche und der zweite Anschluss (5, 4) konfiguriert sind, um die elektromagnetische Spule (1) bei einer zweiten oder dritten Spannung zu betreiben, die durch die Gleichstromversorgung bereitgestellt wird, wobei die zweite und die dritte Spannung gleich oder niedriger als die erste Spannung sind, und dass

- das Schützsystem ferner eine Messvorrichtung (8) umfasst, die konfiguriert ist, um die von der Gleichstromversorgung bereitgestellte Spannung zu messen, und konfiguriert ist, um das Schütz (10) von dem ersten und dem zweiten Anschluss (2, 4) oder von dem ersten und dem zusätzlichen Anschluss (2, 5) oder von dem zusätzlichen und dem zweiten Anschluss (5, 4) in Abhängigkeit von der gemessenen Spannung zu betreiben.

2. Schützsystem nach Anspruch 1, wobei es einen Schalter (7) umfasst, der konfiguriert ist, um zwischen der Messvorrichtung (8) und dem Schütz (10) angeordnet zu sein und zwischen dem ersten Anschluss (2) und dem zusätzlichen Anschluss (5) beweglich zu sein, um die elektromagnetische Spule (1) von dem ersten und dem zweiten Anschluss (2, 4) oder von dem zusätzlichen und dem zweiten Anschluss (5, 4) zu betätigen.

3. Schützsystem nach Anspruch 1, wobei es einen Schalter (7) umfasst, der so konfiguriert ist, dass er zwischen der Messvorrichtung (8) und dem Schütz (10) angeordnet ist und zwischen dem zusätzlichen Anschluss (5) und dem zweiten Anschluss (4) beweglich ist, um die elektromagnetische Spule (1) von dem ersten und dem zusätzlichen Anschluss (2, 5) oder von dem ersten und dem zweiten Anschluss (2, 4) zu betätigen.

4. Schützsystem nach Anspruch 2, wobei der Schalter (7) zwischen dem ersten Anschluss (2) und dem zusätzlichen Anschluss (5) beweglich ist und das Schützsystem auch einen zweiten Schalter (7') umfasst, der so konfiguriert ist, dass er zwischen der Messvorrichtung (8) und dem Schütz (10) angeordnet ist und zwischen dem zusätzlichen Anschluss (5) und dem zweiten Anschluss (4) zum Betreiben der elektromagnetischen Spule (1) beweglich ist.

5. Schützsystem nach einem der vorhergehenden Ansprüche, wobei das Schütz (10) auch einen zweiten zusätzlichen Anschluss (9) umfasst, der zwischen dem ersten und dem zweiten Anschluss (2, 4) in der Längsachse der elektromagnetischen Spule (1) angeordnet ist und konfiguriert ist, um mit der Gleichstromversorgung verbunden zu werden, wobei der erste und der zweite zusätzliche Anschluss (2, 9), der zweite zusätzliche Anschluss (9) und der zweite Anschluss (4) und die zusätzlichen Anschlüsse (5, 9) konfiguriert sind, um die elektromagnetische Spule (1) mit zusätzlichen Spannungen zu betreiben, die durch die Gleichstromversorgung bereitgestellt werden, wobei die zusätzlichen Spannungen gleich oder niedriger als die erste Spannung sind.

6. Schützsystem nach Anspruch 5, wobei der Schalter (7) zwischen dem ersten Anschluss (2), dem zusätzlichen Anschluss (5) und dem zweiten zusätzlichen Anschluss (9) beweglich ist, um die elektromagnetische Spule (1) entweder von dem ersten und dem zweiten Anschluss (2, 4), von dem zusätzlichen und dem zweiten Anschluss (5, 4) oder von dem zweiten zusätzlichen und dem zweiten Anschluss (9, 4) zu betätigen.

7. Schützsystem nach Anspruch 5, wobei der Schalter (7) zwischen dem zusätzlichen Anschluss (5), dem zweiten zusätzlichen Anschluss (9) und dem zweiten Anschluss (4) beweglich ist, um die elektromagnetische Spule (1) entweder von dem ersten und dem zweiten Anschluss (2, 4), von dem ersten und dem zusätzlichen Anschluss (2, 5) oder von dem ersten Anschluss und dem zweiten zusätzlichen Anschluss (2, 9) zu betätigen.

8. Schützsystem nach einem der vorhergehenden Ansprüche, wobei der zusätzliche Anschluss (5) in der Hälfte des Abstands in der Längsachse der elektromagnetischen Spule (1) zwischen dem ersten und dem zweiten Anschluss (2, 4) angeordnet ist.

9. Schützsystem nach einem der vorhergehenden Ansprüche 1 bis 7, wobei der zusätzliche Anschluss (5) in einem unterschiedlichen Abstand in der Längsachse der elektromagnetischen Spule (1) des ersten und des zweiten Anschlusses (2, 4) angeordnet ist.

10. Verfahren zur Stabilisierung eines Schützsystems, das von einer schwankenden Gleichstromversorgung gespeist wird, wobei das Verfahren die folgenden Schritte umfasst:

- Bereitstellen eines Schützes (10), umfassend:

- eine elektromagnetische Spule (1) mit einer Wicklung, und
- einen ersten und einen zweiten Anschluss (2, 4), die sich in der elektromagnetischen Spule (1) befinden und dazu konfiguriert sind, mit der Gleichstromversorgung verbunden zu werden, wobei der erste und der zweite Anschluss (2, 4) dazu konfiguriert sind, die elektromagnetische Spule (1) bei einer ersten Spannung zu betreiben, die durch die Gleichstromversorgung bereitgestellt wird,

- Bereitstellen mindestens eines zusätzlichen Anschlusses (5) für das Schütz (10), wobei sich der zusätzliche Anschluss (5) zwischen dem ersten und dem zweiten Anschluss (2, 4) in der Längsachse der elektromagnetischen Spule (1) befindet und dazu konfiguriert ist, mit der Gleichstromversorgung verbunden zu werden, wobei der erste und der zusätzliche Anschluss (2, 5) und der zusätzliche und der zweite Anschluss (5, 4) dazu konfiguriert sind, die elektromagnetische Spule (1) bei einer zweiten oder dritten Spannung zu betreiben, die durch die Gleichstromversorgung bereitgestellt wird, wobei die zweite und die dritte Spannung gleich oder niedriger als die erste Spannung sind,
- Bereitstellen einer Messvorrichtung (8), die konfiguriert ist, um die von der schwankenden Gleichstromversorgung bereitgestellte Spannung zu messen,
- Betreiben des Schützes (10) von dem ersten und dem zweiten Anschluss (2, 4) oder von dem ersten und dem zusätzlichen Anschluss (2, 5) oder von dem zusätzlichen und dem zweiten Anschluss (5, 4) in Abhängigkeit von der gemessenen Spannung.

11. Verfahren zur Stabilisierung eines Schützsystems, das von einer schwankenden Gleichstromversorgung gespeist wird, nach Anspruch 10, umfassend den Schritt des Bereitstellens eines Schalters (7), der konfiguriert ist, um zwischen der Messvorrichtung (8) und dem Schütz (10) angeordnet zu werden, und um den Schalter (7) zwischen dem ersten Anschluss (2) und dem zusätzlichen Anschluss (5) zu bewegen, zum Betreiben der elektromagnetischen Spule (1) von dem ersten und dem zweiten Anschluss (2, 4) oder von dem zusätzlichen und dem zweiten Anschluss (5, 4).

12. Verfahren zur Stabilisierung eines Schützsystems, das von einer schwankenden Gleichstromversorgung gespeist wird, nach Anspruch 10, umfassend den Schritt des Bereitstellens von zwei Schaltern (7, 7') und des Bewegens eines der zwei Schalter (7) zwischen dem ersten und dem zusätzlichen Anschluss (2, 5) und des Bewegens des anderen Schalters (7') zwischen dem zusätzlichen Anschluss (5) und dem zweiten Anschluss (4).

13. Verfahren zur Stabilisierung eines Schützsystems, das von einer schwankenden Gleichstromversorgung gespeist wird, nach Anspruch 10 bis 12, umfassend den Schritt des Bereitstellens von zwei zusätzlichen Anschlüssen (5, 9), die zwischen dem ersten und dem zweiten Anschluss (2, 4) in der Längsachse der elektromagnetischen Spule (1) angeordnet sind, wobei der erste und jeder der zusätzlichen Anschlüsse (2, 5, 9), jeder der zusätzlichen Anschlüsse und die zweiten Anschlüsse (5, 9, 4) und die zusätzlichen Anschlüsse (5, 9) konfiguriert sind, um die elektromagnetische Spule (1) bei einer Spannung zu betreiben, die durch die Gleichstromversorgung bereitgestellt wird, wobei die Spannung gleich oder niedriger als die erste Spannung ist.

## Revendications

1. Système de contacteur pour une alimentation en courant continu fluctuant, le système de contacteur comprenant un contacteur (10) qui comprend :

- une bobine électromagnétique (1) ayant un enroulement, et
- des première et deuxième bornes (2, 4) situées dans la bobine électromagnétique (1) et configurées pour être connectées à l'alimentation en courant continu, les première et deuxième bornes (2, 4) étant configurées pour faire fonctionner la bobine électromagnétique (1) à une première tension fournie par l'alimentation en courant continu,
- au moins une borne supplémentaire (5) située entre les première et deuxième bornes (2, 4) dans l'axe longitudinal de la bobine électromagnétique (1),
**caractérisé en ce que** :
- la borne supplémentaire (5) située entre les première et deuxième bornes (2, 4) dans l'axe longitudinal de la bobine électromagnétique (1) configurées pour être connectées à l'alimentation en courant continu, la première borne et la borne supplémentaire (2, 5) et la borne supplémentaire et la deuxième borne (5, 4) sont configurées pour faire fonctionner la bobine électromagnétique (1) à une deuxième ou troisième tension fournie par l'alimentation en courant continu, les deuxième et troisième tensions étant égales ou inférieures à la première tension, et **en ce que**

- le système de contacteur comprend en outre un dispositif de mesure (8) configuré pour mesurer la tension fournie par l'alimentation en courant continu et configuré pour faire fonctionner le contacteur (10) à partir des première et deuxième bornes (2, 4) ou à partir de la première borne et de la borne supplémentaire (2, 5) ou à partir de la borne supplémentaire et de la deuxième borne (5, 4) en fonction de la tension mesurée.

**2.** Système de contacteur selon la revendication 1, comprenant un commutateur (7) configuré pour être situé entre le dispositif de mesure (8) et le contacteur (10) et mobile entre la première borne (2) et la borne supplémentaire (5) afin de faire fonctionner la bobine électromagnétique (1) à partir des première et deuxième bornes (2, 4) ou à partir de la borne supplémentaire et de la deuxième borne (5, 4).

**3.** Système de contacteur selon la revendication 1, comprenant un commutateur (7) configuré pour être situé entre le dispositif de mesure (8) et le contacteur (10) et mobile entre la borne supplémentaire (5) et la deuxième borne (5) afin de faire fonctionner la bobine électromagnétique (1) à partir de la première borne et de la borne supplémentaire (2, 5) ou à partir des première et deuxième bornes (2, 4).

**4.** Système de contacteur selon la revendication 2, dans lequel le commutateur (7) est mobile entre la première borne (2) et la borne supplémentaire (5) et le système de contacteur comprend également un deuxième commutateur (7') configuré pour être situé entre le dispositif de mesure (8) et le contacteur (10) et mobile entre la borne supplémentaire (5) et la deuxième borne (4) pour faire fonctionner la bobine électromagnétique (1).

**5.** Système de contacteur selon l'une quelconque des revendications précédentes, dans lequel le contacteur (10) comprend également une deuxième borne supplémentaire (9) située entre les première et deuxième bornes (2, 4) dans l'axe longitudinal de la bobine électromagnétique (1) et configurée pour être connectée à l'alimentation en courant continu, les première et deuxième bornes supplémentaires (2, 9), la deuxième borne supplémentaire (9) et la deuxième borne (4) et les bornes supplémentaires (5, 9) étant configurées pour faire fonctionner la bobine électromagnétique (1) à des tensions supplémentaires fournies par l'alimentation en courant continu, lesdites tensions supplémentaires étant égales ou inférieures à la première tension.

**6.** Système de contacteur selon la revendication 5, dans lequel le commutateur (7) est mobile entre la première borne (2), la borne supplémentaire (5) et la deuxième borne supplémentaire (9) pour faire fonctionner la bobine électromagnétique (1) à partir des première et deuxième bornes (2, 4), à partir de la borne supplémentaire et des deuxièmes bornes (5, 4), ou à partir de la deuxième borne supplémentaire et de la deuxième borne (9, 4).

**7.** Système de contacteur selon la revendication 5, dans lequel le commutateur (7) est mobile entre la borne supplémentaire (5), la deuxième borne supplémentaire (9) et la deuxième borne (4) pour faire fonctionner la bobine électromagnétique (1) à partir des première et deuxième bornes (2, 4), à partir de la première borne et de la borne supplémentaire (2, 5), ou à partir de la première borne et de la deuxième borne supplémentaire (2, 9).

**8.** Système de contacteur selon l'une quelconque des revendications précédentes, dans lequel la borne supplémentaire (5) est située à mi-chemin, dans l'axe longitudinal de la bobine électromagnétique (1), entre les première et deuxième bornes (2, 4).

**9.** Système de contacteur selon l'une quelconque des revendications précédentes 1 à 7, dans lequel la borne supplémentaire (5) est située à une distance différente, dans l'axe longitudinal de la bobine électromagnétique (1), des première et deuxième bornes (2, 4).

**10.** Procédé de stabilisation d'un système de contacteur alimenté par une alimentation en courant continu fluctuant comprenant les étapes suivantes :

- fournir un contacteur (10) comprenant :

- une bobine électromagnétique (1) ayant un enroulement, et
- des première et deuxième bornes (2, 4) situées dans la bobine électromagnétique (1) et configurées pour être connectées à l'alimentation en courant continu, les première et deuxième bornes (2, 4) étant configurées pour faire fonctionner la bobine électromagnétique (1) à une première tension fournie par l'alimentation en courant continu,

- fournir au moins une borne supplémentaire (5) au contacteur (10), la borne supplémentaire (5) étant située entre les première et deuxième bornes (2, 4) dans l'axe longitudinal de la bobine électromagnétique (1) configurée pour être connectée à l'alimentation en courant continu, la première borne et la borne supplémentaire (2, 5) et la borne supplémentaire et la deuxième borne (5, 4) étant configurées pour faire fonctionner la bobine électromagnétique (1) à une deuxième ou troisième tension fournie par l'alimentation en courant continu, les deuxième et troisième tensions étant égales ou inférieures à la première tension,
- fournir un dispositif de mesure (8) configuré pour mesurer la tension fournie par l'alimentation en courant continu fluctuant,
- faire fonctionner le contacteur (10) à partir des première et deuxième bornes (2, 4), à partir de la première borne et de la borne supplémentaire (2, 5), ou à partir de la borne supplémentaire et de la deuxième borne (5, 4) en fonction de la tension mesurée.

11. Procédé de stabilisation d'un système de contacteur alimenté par une alimentation en courant continu fluctuant, selon la revendication 10, comprenant l'étape consistant à fournir un commutateur (7) configuré pour être situé entre le dispositif de mesure (8) et le contacteur (10) et à déplacer le commutateur (7) entre la première borne (2) et la borne supplémentaire (5) pour faire fonctionner la bobine électromagnétique (1) à partir des première et deuxième bornes (2, 4) ou à partir de la borne supplémentaire et de la deuxième borne (5, 4).

12. Procédé de stabilisation d'un système de contacteur alimenté par une alimentation en courant continu fluctuant, selon la revendication 10, comprenant l'étape consistant à fournir deux commutateurs (7, 7') et à déplacer l'un des deux commutateurs (7) entre la première borne et la borne supplémentaire (2, 5) et à déplacer l'autre commutateur (7') entre la borne supplémentaire (5) et la deuxième borne (4).

13. Procédé de stabilisation d'un système de contacteur alimenté par une alimentation en courant continu fluctuant, selon les revendications 10 à 12, comprenant l'étape consistant à fournir deux bornes supplémentaires (5, 9) situées entre les première et deuxième bornes (2, 4) dans l'axe longitudinal de la bobine électromagnétique (1), la première borne et chacune des bornes supplémentaires (2, 5, 9), chacune des bornes supplémentaires et la deuxième borne (5, 9, 4) et les bornes supplémentaires (5, 9) étant configurées pour faire fonctionner la bobine électromagnétique (1) à une tension fournie par l'alimentation en courant continu, ladite tension étant égale ou inférieure à la première tension.

FIG. 1

FIG. 2

FIG. 3

FIG. 4

FIG. 5

FIG. 6

FIG. 7

**EP 3 525 225 B1**

**REFERENCES CITED IN THE DESCRIPTION**

**Patent documents cited in the description**

- WO 2009064308 A
- EP 3046131 A
- US 4227231 A
- DE 2305343